# EUROPEAN PATENT APPLICATION

(11) **EP 4 564 584 A1**
(43) Date of publication of application: **04.06.2025**
(21) Application number: 23831319.1
(22) Date of filing: 23.06.2023
(51) Int. Cl.: H01M 50/533, H01G 11/06, H01G 11/56, H01G 11/68, H01G 11/70, H01G 11/78, H01G 11/86, H01M 4/04, H01M 4/139, H01M 4/66, H01M 4/80, H01M 10/04, H01M 10/052, H01M 10/0562, H01M 10/0585, H01M 10/28, H01M 50/103, H01M 50/107, H01M 50/109, H01M 50/11, H01M 50/174

(54) **METHOD FOR MANUFACTURING ELECTRODE LAMINATE, ELECTROCHEMICAL ELEMENT, AND METHOD FOR MANUFACTURING ELECTROCHEMICAL ELEMENT**

(30) Priority: 28.06.2022 JP 2022103788; 28.06.2022 JP 2022103794
(71) Applicant: Maxell, Ltd., Kyoto 618-8525 (JP)
(72) Inventor: MASUDA, Shumpei, Otokuni-gun, Kyoto 618-8525 (JP); YAMAGUCHI, Koji, Otokuni-gun, Kyoto 618-8525 (JP); KAMIZORI, Haruki, Otokuni-gun, Kyoto 618-8525 (JP); AOKI, Hiroyoshi, Otokuni-gun, Kyoto 618-8525 (JP); SHINTANI, Ayako, Otokuni-gun, Kyoto 618-8525 (JP); SATO, Yuta, Otokuni-gun, Kyoto 618-8525 (JP); FURUKAWA, Kazuki, Otokuni-gun, Kyoto 618-8525 (JP); OTSUKA, Takumi, Otokuni-gun, Kyoto 618-8525 (JP); NISHIMURA, Masaki, Otokuni-gun, Kyoto 618-8525 (JP)
(74) Representative: Diehl & Partner
(86) International application number: PCT/JP2023/023397
(87) International publication number: WO 2024/004877

(57) **Abstract**

Provided is an electrochemical device having a low internal resistance and a reduced variation in the internal resistance. Also provided is a method for producing an electrode stacked body that is able to prevent the occurrence of a short circuit during assembly of an electrochemical device, an electrochemical device that includes an electrode stacked body produced by the above production method, and a method for producing the electrochemical device.

An electrochemical device in the first aspect of the present invention includes an electrode stacked body including a first electrode, an isolation layer, and a second electrode, and a porous metal layer interposed between the electrode stacked body and a conductive path of an exterior body. The electrode stacked body is pressed against the porous metal layer by a pressing member. The second aspect of the present invention relates to a method for producing an electrode stacked body including a first electrode and/or a second electrode having an electrode mixture layer and a sheet-type current collector. The sheet-type current collector is formed by adjusting the amount of compression of a porous base material to satisfy s - t < a + b, where s represents the thickness of the porous base material before the compression, t represents the thickness of a portion of the porous base material after the compression, which faces the electrode mixture layer, a represents the thickness of the electrode mixture layer, and b represents the thickness of the isolation layer.

## Description

### Technical Field

The present invention relates to a method for producing an electrode stacked body that is able to prevent the occurrence of a short circuit during assembly of an electrochemical device. The present invention also relates to an electrochemical device that includes an electrode stacked body produced by the above production method and a method for producing the electrochemical device. The present invention further relates to an electrochemical device having a low internal resistance and a reduced variation in the internal resistance.

### Background Art

With the development of portable electronic equipment such as mobile phones and notebook personal computers and the practical use of electric vehicles in recent years, there has been a growing demand of small lightweight batteries having a high capacity and a high energy density.

At present, lithium batteries that can meet this demand, particularly lithium ion batteries include the following: a lithium-containing composite oxide such as lithium cobalt oxide (LiCoO₂) or lithium nickel oxide (LiNiO₂) as a positive electrode active material; graphite or the like as a negative electrode active material; and an organic electrolyte solution containing an organic solvent and a lithium salt as a non-aqueous electrolyte.

Moreover, with further development of equipment using lithium ion batteries, the lithium ion batteries are required to have not only a longer life, a higher capacity, and a higher energy density, but also high reliability.

However, the organic electrolyte solution used in the lithium ion batteries contains a flammable organic solvent and may generate abnormal heat if an unusual situation such as a short circuit occurs in the batteries. In view of the recent trend of increasing the energy density and the amount of the organic solvent in the organic electrolyte solution of the lithium ion batteries, the reliability of the lithium ion batteries needs to be further improved.

Under these circumstances, all-solid-state lithium batteries (all-solid-state batteries) that do not include an organic solvent have also been studied. All-solid-state batteries use a molded body of a solid electrolyte containing no organic solvent, instead of a conventional organic solvent-based electrolyte, and therefore are very safe because the solid electrolyte poses no risk of abnormal heat generation.

Moreover, the all-solid-state batteries have high reliability, high environmental resistance, and a long life in addition to high safety, and are expected to be maintenance-free batteries that can contribute to the development, safety, and security of the society. The introduction of all-solid-state batteries into the society serves to achieve the following goals of the 17 Sustainable Development Goals (SDGs) established by the United Nations: Goal 3 (Ensure healthy lives and promote well-being for all at all ages); Goal 7 (Ensure access to affordable, reliable, sustainable and modern energy for all); Goal 11 (Make cities and human settlements inclusive, safe, resilient and sustainable); and Goal 12 (Ensure sustainable consumption and production patterns).

Some batteries, including all-solid-state batteries, are known to have a flat shape and called coin batteries or button batteries. Such a flat battery includes an exterior body composed of an exterior can, a sealing can, and a gasket interposed between the exterior can and the sealing can, and the edge around the opening of the exterior can is crimped inward. When the battery such as an all-solid-state battery includes electrodes (pellet electrodes), each of which is made of a molded body of an electrode mixture containing an active material, the exterior can and the sealing can are generally used as conductive paths that lead from the inside to the outside of the battery, and the pellet electrodes are brought into contact with the respective conductive paths. Thus, the exterior can and the sealing can function as a pair of electrode terminals.

However, when the pellet electrodes are in contact with the conductive paths, the conductive connections between them are not sufficiently established due to, e.g., vibrations or changes in volume of the electrodes during charge and discharge. Consequently, there could be an issue that an internal resistance of the battery increases.

Moreover, the degree of contact between the pellet electrodes and the conductive paths differs from battery to battery because of a variation in thickness of the stacked pellet electrodes and a variation in size of the exterior can. Therefore, the internal resistance of the battery may increase or vary significantly, thereby leading to a large variation in the discharge load characteristics of the battery.

On the other hand, technologies have been proposed to reduce the internal resistance of the battery having the conductive paths described above. For example, Patent Document 1 discloses a flat-shaped all-solid-state battery including a stack of a positive electrode, a solid electrolyte layer, and a negative electrode and a conductive porous member that is disposed between the stack and the inner bottom surface of an outer can or between the stack and the inner bottom surface of a sealing can. The conductive porous member is made of a molded body of graphite and has flexibility. This configuration can maintain good contact between the electrode stack and the battery container, and thus can ensure excellent conductive properties. When a graphite porous member is inserted between the electrode stack and the battery container, the electrode stack and the porous member are pressed together during assembly of the battery. Since the porous member remains compressed, good electrical conduction between the electrode stack and the battery container can be achieved by adjusting the thickness of the porous member in accordance with, e.g., a variation in thickness of the electrode stack and a variation in height of the exterior material.

### Prior Art Documents

### Patent Documents

Patent Document 1: WO 2020/066323

### Disclosure of Invention

### Problem to be Solved by the Invention

As disclosed in Patent Document 1, the arrangement of a porous molded sheet of graphite between the electrode stack and the battery container can improve the electrical conduction between the electrode stack and the battery container due to the pressing force of the sheet. However, further consideration should be given to how to establish better conductive connection, while taking into account the material of a current collector, and to reduce a variation in the internal resistance of the individual batteries.

Moreover, as described in Comparative Example 2 of Patent Document 1, the conductive porous sheet may be a porous sheet that is easily compressible and undergoes a large amount of deformation when pressed, e.g., a porous sheet with a high porosity such as a foamed metal porous body. Use of such a porous sheet can cause the following problems if a positional displacement between the electrode stack and the porous sheet occurs during assembly of the battery.

When the electrode stack and the porous sheet are displaced from each other and pressed together with the peripheral edge of the porous sheet protruding from the edge of the electrode stack, the portion of the porous sheet that faces the electrode stack is compressed to become thinner, but the peripheral edge of the porous sheet that protrudes from the edge of the electrode stack is left uncompressed. Therefore, depending on the original thickness of the porous sheet and the amount of compression, the height of the peripheral edge of the porous sheet may reach the electrode located on the opposite side of the electrode stack to the porous sheet. This poses a risk of a short circuit between the two electrodes via the peripheral edge of the porous sheet.

In particular, these problems are more likely to occur when at least a part of the porous sheet is embedded in the electrode because the end of the porous sheet (facing toward the counter electrode) becomes closer to the counter electrode.

The present invention has been made in view of the above circumstances, and the object of the present invention is to provide an electrochemical device having a low internal resistance and a reduced variation in the internal resistance. Another object of the present invention is to provide a method for producing an electrode stacked body that is able to prevent the occurrence of a short circuit during assembly of an electrochemical device, to provide an electrochemical device that includes an electrode stacked body produced by the above production method, and to provide a method for producing the electrochemical device.

### Means for Solving Problem

The first aspect of the present invention relates to an electrochemical device that includes an electrode stacked body including a first electrode, a second electrode, and an isolation layer interposed between the first electrode and the second electrode, and an exterior body in which the electrode stacked body is enclosed. At least one of the first electrode and the second electrode of the electrode stacked body has a current collector on a surface facing away from the isolation layer and is electrically connected to a porous metal layer that is disposed on a surface of the current collector. The electrochemical device includes a pressing member for pressing the electrode stacked body against the porous metal layer. The exterior body has a conductive path leading from an inside to an outside, and the conductive path is electrically connected to the porous metal layer.

The second aspect of the present invention includes a method for producing an electrode stacked body including a first electrode, a second electrode, and an isolation layer interposed between the first electrode and the second electrode. At least one of the first electrode and the second electrode has an electrode mixture layer and a sheet-type current collector disposed on a surface of the electrode mixture layer. The method includes forming the sheet-type current collector by compressing a porous base material in a thickness direction. An amount of compression of the porous base material is adjusted to satisfy s - t < a + b, where s represents a thickness of the porous base material before the compression, t represents a thickness of a portion of the porous base material after the compression, which faces the electrode mixture layer, a represents a thickness of the electrode mixture layer, and b represents a thickness of the isolation layer.

The second aspect of the present invention also includes an electrochemical device that includes an exterior body and an electrode stacked body enclosed in the exterior body. The electrode stacked body is produced by the production method of an electrode stacked body according to the present invention.

The second aspect of the present invention also includes a method for producing an electrochemical device that includes an exterior body and an electrode stacked body enclosed in the exterior body. The method includes using an electrode stacked body produced by the production method of an electrode stacked body according to the present invention as the electrode stacked body.

### Effects of the Invention

The first aspect of the present invention can provide the electrochemical device having a low internal resistance and a reduced variation in the internal resistance.

The second aspect of the present invention can prevent the occurrence of an internal short circuit even if the position of the sheet-type current collector, which is formed by compressing the porous base material in the thickness direction, is shifted when the current collector is disposed on the surface of at least one electrode of the electrode stacked body that is used for assembly of the electrochemical device.

### Brief Description of Drawing

[FIG. 1] FIG. 1 is a cross-sectional view schematically illustrating an example of an electrochemical device in the first aspect of the present invention.
[FIG. 2] FIG. 2 is a cross-sectional view schematically illustrating an example of a main part of an electrode stacked body produced by the production method of the present invention.
[FIG. 3] FIG. 3 is a cross-sectional view schematically illustrating an example of an electrochemical device of the present invention that includes an electrode stacked body produced by the production method of the present invention.

### Description of the Invention

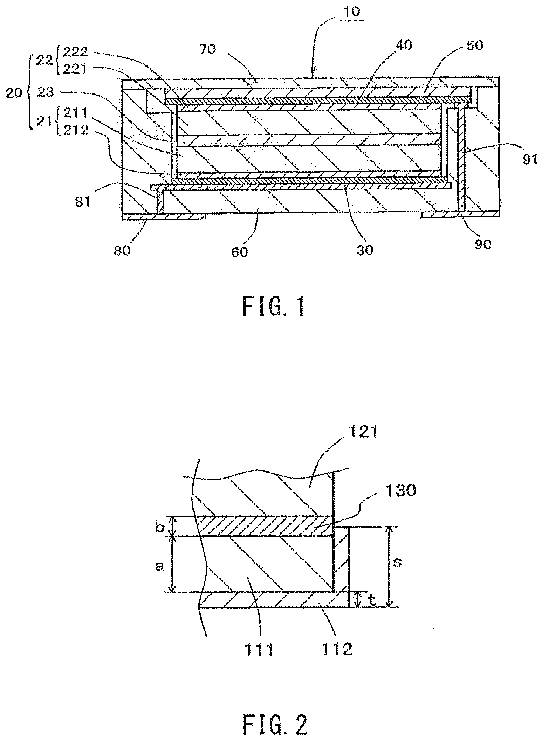

FIG. 1 is a vertical cross-sectional view schematically illustrating an example of an electrochemical device in the first aspect of the present invention. In FIG. 1, an electrochemical device 10 includes an electrode stacked body 20 including a first electrode 21, a second electrode 22, and an isolation layer 23 interposed between the first electrode 21 and the second electrode 22. The electrode stacked body 20 is enclosed in an exterior body composed of an exterior container 60 and a lid 70.

External terminals 80, 90 are provided on the lower surface of the exterior container 60 in FIG. 1 to electrically connect the electrochemical device 10 to the applicable equipment. The external terminal 80 is electrically connected to the first electrode 21 of the electrode stacked body 20 through a conductive path 81. The external terminal 90 is electrically connected to the second electrode 22 of the electrode stacked body 20 through a lead 40 and a conductive path 91.

The first electrode 21 of the electrode stacked body 20 has an electrode mixture layer (a molded body of an electrode mixture) 211 and a current collector 212. The second electrode 22 of the electrode stacked body 20 has an electrode mixture layer (a molded body of an electrode mixture) 221 and a current collector 222.

When the electrode stacked body 20 includes a solid electrolyte layer as the isolation layer 23, e.g., only the electrode stacked body 20 is enclosed in the exterior body. On the other hand, when the electrode stacked body 20 includes a separator as the isolation layer 23, the electrode stacked body 20 and an electrolyte (not shown) are enclosed in the exterior body.

A porous metal layer 30 is disposed on the surface of the current collector 212 of the first electrode 21 (i.e., the surface facing away from the electrode mixture layer 211). The first electrode 21 is electrically connected to the porous metal layer 30 by contacting the current collector 212 with the porous metal layer 30.

Since the porous metal layer has pores and is made of metal, it can be easily subjected to plastic deformation by the application of a force in the thickness direction. Thus, in the production of an electrochemical device, the electrode stacked body is inserted in the exterior body as it is pressed against the porous metal layer (i.e., the metal porous body constituting the porous metal layer), and the porous metal layer is compressed and deformed, making good contact with the current collector of one of the first electrode and the second electrode of the electrode stacked body. Moreover, when many electrochemical devices are produced, the individual electrochemical devices can have a uniform degree of electrical conduction between the porous metal layer and the electrode stacked body. Due to these effects, the first aspect of the present invention can provide the electrochemical device having a low internal resistance and a reduced variation in the internal resistance.

The porous metal layer in the first aspect of the present invention may be a porous body made of metal that does not adversely affect the features of the electrochemical device when used in the electrochemical device. The porous metal layer is preferably a foamed metal porous body (e.g., "Celmet (registered trademark)" manufactured by Sumitomo Electric Industries, Ltd.) because the foamed metal porous body relatively easily undergoes plastic deformation.

The thickness of the porous metal layer in the electrochemical device is preferably 100 µm or more, and more preferably 150 µm or more from the viewpoint of ensuring a better function of the porous metal layer. The upper limit of the thickness of the porous metal layer in the electrochemical device is not particularly limited and is preferably 1500 µm or less, and more preferably 1000 µm or less from the viewpoint of reducing the volume of components that are not involved in power generation inside the exterior body.

The thickness of the porous metal layer is determined in the following manner. First, the cross section of the porous metal layer in the thickness direction is observed with a scanning electron microscope (SEM) at a magnification of 50X to 1000X. Then, the maximum value of the width (in the thickness direction) in the SEM image is defined as the thickness of the porous metal layer. The values in the following examples are obtained by this method.

As described above, it is preferable that the porous metal layer is formed by compressing the metal porous body in the thickness direction. The thickness of the porous metal layer is preferably 90% or less, and more preferably 80% or less of the thickness of the metal porous body (e.g., the foamed metal porous body) that constitutes the porous metal layer. Thus, the thickness of the metal porous body (e.g., the foamed metal porous body) is preferably 150 to 1000 µm.

The porosity of the metal porous body (e.g., the foamed metal porous body) that constitutes the porous metal layer is preferably 99.5% or less, more preferably 99% or less, and further preferably 98.5% or less from the viewpoint of facilitating the plastic deformation of the porous metal layer due to the pressure applied by the electrode stacked body and ensuring better effects of reducing not only the internal resistance of the electrochemical device, but also a variation in the internal resistance. Furthermore, the porosity of the metal porous body (e.g., the foamed metal porous body) is preferably 80% or more, more preferably 90% or more, and further preferably 95% or more from the viewpoint of ensuring sufficient strength for use.

In the electrochemical device 10 as illustrated in FIG. 1, the porous metal layer 30 is disposed on the surface of the current collector 212 facing away from the electrode mixture layer 211 of the first electrode 21. On the other hand, the lead 40 made of, e.g., metal foil is disposed on the surface of the current collector 222 facing away from the electrode mixture layer 221 of the second electrode 22 in order to electrically connect the second electrode 22 to the conductive path 91. In this case, the porous metal layer may be disposed between the current collector 221 of the second electrode 22 and the lead 40.

In the electrochemical device 10 as illustrated in FIG. 1, a pressing member 50 is provided between the lead 40 and the lid 70. The pressing member 50 has the function of pressing the electrode stacked body 20 against the porous metal layer 30. The current collector 212 of the first electrode 21 of the electrode stacked body 20 is pressed against the porous metal layer 30 due to the pressing force exerted by the pressing member 50. Therefore, use of the pressing member 50 makes plastic deformation of the porous metal layer 30 easier to enable better contact between the current collector 212 and the porous metal layer 30. Thus, the pressing member for pressing the electrode stacked body against the porous metal layer can further improve the effects of reducing not only the internal resistance of the electrochemical device, but also a variation in the internal resistance of the individual batteries.

The pressing member may be, e.g., a spacer made of an elastic body such as a rubber sheet or a spring (e.g., a leaf spring).

The second aspect of the present invention relates to a method for producing an electrode stacked body including a first electrode, a second electrode, and an isolation layer interposed between the first electrode and the second electrode. At least one of the first electrode and the second electrode has an electrode mixture layer and a sheet-type current collector disposed on the surface of the electrode mixture layer. The sheet-type current collector is formed by compressing a porous base material in the thickness direction. The amount of compression of the porous base material is adjusted to satisfy s - t < a + b, where s represents a thickness of the porous base material before the compression, t represents a thickness of a portion of the porous base material after the compression, which faces the electrode mixture layer, a represents the thickness of the electrode mixture layer, and b represents a thickness of the isolation layer.

FIG. 2 is a cross-sectional view schematically illustrating an example of the main part of the electrode stacked body produced by the production method of the present invention. The electrode stacked body as illustrated in FIG. 2 includes a first electrode having an electrode mixture layer 111 and a sheet-type current collector 112, a second electrode having an electrode mixture layer 121, and an isolation layer 130 interposed between the first electrode and the second electrode.

The sheet-type current collector 112 is formed by compressing the porous base material in the thickness direction (downward in the figure) to a thickness t, but a part of the porous base material (i.e., the portion that does not face the lower surface of the electrode mixture layer 111 on the right side in the figure) has not been compressed and remains at its original thickness s. In this case, a short circuit will occur if the end of the uncompressed portion of the current collector 112 reaches the electrode mixture layer 121 of the second electrode.

In the production method of the present invention, as illustrated in FIG. 2, the electrode stacked body is produced by adjusting the amount of compression of the porous base material so that the difference "s - t" between the thickness s of the porous base material before the compression and the thickness t of the portion of the porous base material (current collector 112) after the compression, which faces the electrode mixture layer 121, is smaller than the sum "a + b" of the thickness a of the electrode mixture layer 111 and the thickness b of the isolation layer 130.

When the porous base material is compressed in the thickness direction, a part of the porous base material may be embedded in the electrode mixture layer, and the electrode mixture may enter the pores of the sheet-type current collector thus formed. In the present invention, the thickness a of the electrode mixture layer represents the distance of the portion of the electrode mixture between the sheet-type current collector and the isolation layer, excluding the electrode mixture present in the pores of the sheet-type current collector. If a part of the porous base material is embedded in the electrode mixture layer, the end of the sheet-type current collector facing toward the counter electrode (i.e., the second electrode in FIG. 2) becomes closer to the electrode mixture layer of the counter electrode. To deal this issue, the present invention determines the thickness of the electrode mixture layer as described above, and adjusts the amount of compression of the porous base material. Therefore, even if the porous base material is displaced from the electrode mixture layer as it is compressed into a sheet-type current collector such that there is a portion of the porous base material that is not sufficiently compressed, the present invention can effectively prevent the occurrence of an internal short circuit of the electrochemical device caused by the contact of this portion of the porous base material with the counter electrode.

In the electrode stacked body produced by the production method of the present invention, either the first electrode or the second electrode may have the electrode mixture layer and the sheet-type current collector disposed on the surface of the electrode mixture layer, in which the sheet-type current collector is formed by compressing the porous base material in the thickness direction. Alternatively, both the first electrode and the second electrode may have the configuration above.

When the sheet-type current collector formed by compressing the porous base material in the thickness direction is disposed on the surface of the electrode mixture layer of each of the first electrode and the second electrode, it is preferable that the sheet-type current collector for at least one of the electrodes is formed by adjusting the amount of compression of the porous base material so that the value of s - t is smaller than a in order to prevent a short circuit due to the contact between the current collectors.

The electrochemical device in the second aspect of the present invention includes an exterior body and the electrode stacked body of the present invention that is enclosed in the exterior body. The electrode stacked body is produced by the production method of the present invention.

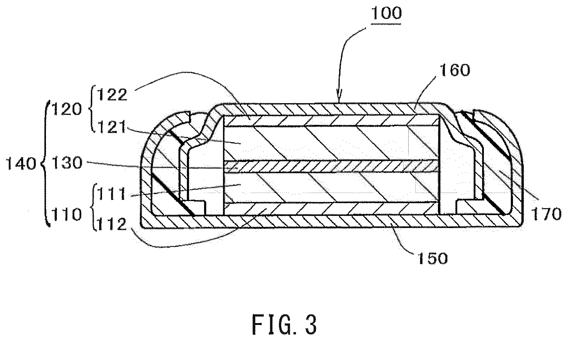

FIG. 3 is a cross-sectional view schematically illustrating an example of an electrochemical device of the present invention that includes an electrode stacked body produced by the production method of the present invention. In FIG. 3, an electrochemical device 100 includes an electrode stacked body 140 including a first electrode 110, a second electrode 120, and an isolation layer 130 interposed between the first electrode 110 and the second electrode 120. The electrode stacked body 140 is enclosed in an exterior body composed of a metal exterior can 150, a metal sealing can 160, and a resin gasket 170 interposed between the exterior can 150 and the sealing can 160. The sealing can 160 is fitted in the opening of the exterior can 150 via the gasket 170, and the edge around the opening of the exterior can 150 is crimped inward. Thus, the gasket 170 comes into contact with the sealing can 160, so that the opening of the exterior can 150 is sealed to create a closed structure inside the device.

When the electrode stacked body 140 includes a solid electrolyte layer as the isolation layer 130, only the electrode stacked body 140, for example, is enclosed in the exterior body. On the other hand, when the electrode stacked body 140 includes a separator as the isolation layer 130, the electrode stacked body 140 and an electrolyte (not shown) are enclosed in the exterior body.

The first electrode 110 has an electrode mixture layer 111 and a sheet-type current collector 112 that is formed by compressing a porous base material in the thickness direction. The second electrode 120 has an electrode mixture layer 121 and a sheet-type current collector 122 that is formed by compressing a porous base material in the thickness direction. The electrochemical device 100 as illustrated in FIG. 2 indicates the assembled state where each of the porous base materials has been compressed in the thickness direction without causing a positional displacement. Because of the compression of the entire porous base materials, both the sheet-type current collector 112 of the first electrode 110 and the sheet-type current collector 122 of the second electrode 120 are suitably formed.

In the electrochemical device 100 as illustrated in FIG. 3, the metal exterior can 150 forms a conductive path for the first electrode 110, and the end portion of the sheet-type current collector 112 that is exposed on the surface of the first electrode 110 is brought into contact with the inner surface of the exterior can 150, thereby providing electrical conduction between the first electrode 110 and the exterior can 150 (i.e., the conductive path formed by the exterior can 150). The outer surface of the exterior can 150 serves as an external terminal for electrically connecting the electrochemical device to external equipment.

In the electrochemical device 100 as illustrated in FIG. 3, the metal sealing can 160 forms a conductive path for the second electrode 120, and the end portion of the sheet-type current collector 122 that is exposed on the surface of the second electrode 120 is brought into contact with the inner surface of the sealing can 160, thereby providing electrical conduction between the second electrode 120 and the sealing can 160 (i.e., the conductive path formed by the sealing can 160). The outer surface of the sealing can 160 serves as an external terminal for electrically connecting the electrochemical device to external equipment.

In both the first aspect and the second aspect of the present invention, the electrochemical device includes a battery, a capacitor, etc. When the electrochemical device is a battery in the first aspect and the second aspect of the present invention, the examples of the battery include a primary battery, a secondary battery, a battery (all-solid-state battery) having a solid electrolyte layer interposed between a positive electrode and a negative electrode, and a battery (other than all-solid-state battery) having a separator interposed between a positive electrode and a negative electrode, and an electrolyte containing a solvent (such as a non-aqueous electrolyte solution, an aqueous electrolyte solution, or gel electrolyte obtained by gelation of any of these electrolyte solutions). When the electrochemical device is a capacitor in the first aspect and the second aspect of the present invention, the examples of the capacitor include an electric double layer capacitor and a lithium ion capacitor.

Hereinafter, the components of the electrochemical devices in the first aspect and the second aspect of the present invention will be described.

### <Electrode stacked body>

The electrode stacked body includes a first electrode, a second electrode, and an isolation layer interposed between the first electrode and the second electrode.

In the first aspect of the present invention, the examples of the first electrode and the second electrode include an electrode made of a molded body of an electrode mixture containing, e.g., an electrode active material and an electrode having the molded body as an electrode mixture layer on the surface of a current collector.

In the second aspect of the present invention, at least one of the first electrode and the second electrode has an electrode mixture layer and a sheet-type current collector disposed on the surface of the electrode mixture layer, as described above.

When the electrochemical device including the electrode stacked body is a battery or a lithium ion capacitor, one of the first electrode and the second electrode is a positive electrode, and the other is a negative electrode. When the electrochemical device including the electrode stacked body is an electric double layer capacitor, the first electrode and the second electrode may have the same configuration. In the following, the molded body of the electrode mixture of the positive electrode is referred to as a "positive electrode mixture molded body" and the electrode mixture layer of the positive electrode is referred to as a "positive electrode mixture layer."

When the electrochemical device is a battery and one of the first electrode and the second electrode is a positive electrode, the electrode mixture of the positive electrode, i.e., the positive electrode mixture contains, e.g., a positive electrode active material.

The positive electrode active material contained in the positive electrode of a primary battery may be the same as the positive electrode active materials used in conventionally known non-aqueous electrolyte primary batteries, alkaline batteries, manganese batteries, or the like. Specifically, the examples of the positive electrode active material include the following: manganese dioxide; lithium-containing manganese oxides (such as LiMn₃O₆ and composite oxides having the same crystal structure as manganese dioxide (e.g., β-type, γ-type, or a mixed structure of β-type and γ-type), where the Li content is 3.5% by mass or less, preferably 2% by mass or less, more preferably 1.5% by mass or less, and particularly preferably 1% by mass or less); lithium-containing composite oxides such as LiₐTi_{5/3}O₄ (4/3 ≤ a < 7/3); vanadium oxides; niobium oxides; titanium oxides; sulfides such as iron disulfide; graphite fluoride; silver sulfides such as Ag₂S; and nickel oxides such as NiO₂.

The positive electrode active material contained in the positive electrode of a secondary battery may be the same as the positive electrode active materials used in conventionally known non-aqueous electrolyte secondary batteries, alkaline secondary batteries, or the like. Specifically, the examples of the positive electrode active material include the following: spinel-type lithium manganese composite oxides represented by Li_{1 - x}MᵣMn_{2 - r}O₄ (where M is at least one element selected from the group consisting of Li, Na, K, B, Mg, Ca, Sr, Ba, Ti, V, Cr, Zr, Fe, Co, Ni, Cu, Zn, Al, Sn, Sb, In, Nb, Ta, Mo, W, Y, Ru, and Rh, 0 ≤ x ≤ 1, and 0 ≤ r ≤ 1); layered compounds represented by LiᵣMn_{(1 - s - t)}NiₛMₜO_{(2 - u)}Fᵥ (where M is at least one element selected from the group consisting of Co, Mg, Al, B, Ti, V, Cr, Fe, Cu, Zn, Zr, Mo, Sn, Ca, Sr, and W, 0 ≤ r ≤ 1.2, 0 < s < 0.5, 0 ≤ t ≤ 0.5, u + v < 1, - 0.1 ≤ u ≤ 0.2, and 0 ≤ v ≤ 0.1); lithium cobalt composite oxides represented by Li₁ - ₓCo_{1 - r}MᵣO₂ (where M is at least one element selected from the group consisting of Al, Mg, Ti, V, Cr, Zr, Fe, Ni, Cu, Zn, Ga, Ge, Nb, Mo, Sn, Sb, and Ba, 0 ≤ x ≤ 1, and 0 ≤ r ≤ 0.5); lithium nickel composite oxides represented by Li_{1 - x}Ni_{1 - r}MᵣO₂ (where M is at least one element selected from the group consisting of Al, Mg, Ti, Zr, Fe, Co, Cu, Zn, Ga, Ge, Nb, Mo, Sn, Sb, and Ba, 0 ≤ x ≤ 1, and 0 ≤ r ≤ 0.5); olivine-type composite oxides represented by Li_{1 + s - x}M_{1 - r}NᵣPO₄Fₛ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, 0 ≤ x ≤ 1, 0 ≤ r ≤ 0.5, and 0 ≤ s ≤ 1); pyrophosphate compounds represented by Li_{2 - x}M₁₋ᵣNᵣP₂O₇ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, 0 ≤ x ≤ 2, and 0 ≤ r ≤ 0.5); nickel hydroxide; and silver oxide. These compounds may be used alone or in combination of two or more.

When the electrochemical device is an all-solid-state secondary battery, the average particle size of the positive electrode active material is preferably 1 µm or more, and more preferably 2 µm or more and is also preferably 10 µm or less, and more preferably 8 µm or less. The positive electrode active material may be either primary particles or secondary particles formed by the aggregation of primary particles. Use of the positive electrode active material having an average particle size within the above range increases the interface with the solid electrolyte contained in the positive electrode, and thus can further improve the output characteristics of the battery.

In this specification, the average particle size of various particles (the positive electrode active material, the solid electrolyte, etc.) means a 50% diameter value (D₅₀) in the volume-based cumulative fraction where the integrated volume of particles is calculated in ascending order of particle size by using a particle size distribution analyzer (e.g., Microtrac particle size distribution analyzer "HRA9320" manufactured by NIKKISO CO., LTD.).

When the electrochemical device is an all-solid-state secondary battery, the positive electrode active material preferably has a reaction inhibition layer on its surface to inhibit a reaction with the solid electrolyte contained in the positive electrode.

If the positive electrode active material comes into direct contact with the solid electrolyte in the positive electrode mixture molded body (the positive electrode mixture layer), the solid electrolyte is oxidized to form a resistance layer that may reduce the ionic conduction in the positive electrode mixture molded body (the positive electrode mixture layer). The presence of the reaction inhibition layer on the surface of the positive electrode active material to inhibit a reaction with the solid electrolyte can prevent direct contact between the positive electrode active material and the solid electrolyte. This can suppress a reduction in the ionic conduction in the positive electrode mixture molded body (the positive electrode mixture layer) caused by the oxidation of the solid electrolyte.

The reaction inhibition layer may be made of a material that has an ionic conductivity and is able to inhibit the reaction between the positive electrode active material and the solid electrolyte. The examples of the material that can constitute the reaction inhibition layer include oxides containing Li and at least one element selected from the group consisting of Nb, P, B, Si, Ge, Ti, and Zr, more specifically Nb-containing oxides such as LiNbO₃, and Li₃PO₄, Li₃BO₃, Li₄SiO₄, Li₄GeO₄, LiTiO₃, LiZrO₃, and Li₂WO₄. The reaction inhibition layer may contain only one of these oxides, or may contain two or more of these oxides. Alternatively, the reaction inhibition layer may contain a composite compound of two or more of these oxides. Among the oxides, Nb-containing oxides are preferred, and LiNbO₃ is more preferred.

The amount of the reaction inhibition layer present on the surface of the positive electrode active material is preferably 0.1 to 1.0 part by mass with respect to 100 parts by mass of the positive electrode active material. Use of the reaction inhibition layer within the above range can satisfactorily inhibit the reaction between the positive electrode active material and the solid electrolyte.

The examples of the method for forming the reaction inhibition layer on the surface of the positive electrode active material include a sol-gel method, a mechanofusion method, a CVD method, a PVD method, and an ALD method.

The content of the positive electrode active material in the positive electrode mixture is preferably 60 to 98% by mass from the viewpoint of further increasing the energy density of the electrochemical device.

The positive electrode mixture may contain a conductive assistant. Specific examples of the conductive assistant include carbon materials such as graphite (natural graphite and artificial graphite), graphene, carbon black, carbon nanofibers, and carbon nanotubes. The conductive assistant is not necessary when the active material is, e.g., Ag₂S because conductive Ag is generated during the discharge reaction. The content of the conductive assistant in the positive electrode mixture is preferably 1.0 part by mass or more and is also preferably 7.0 parts by mass or less, and more preferably 6.5 parts by mass or less with respect to 100 parts by mass of the positive electrode active material.

The positive electrode mixture may contain a binder. Specific examples of the binder include fluororesins such as polyvinylidene fluoride (PVDF). The positive electrode mixture does not need to contain a binder, provided that good moldability can be ensured in forming the positive electrode mixture molded body (the positive electrode mixture layer) without using a binder, e.g., as in the case where the positive electrode mixture contains a sulfide-based solid electrolyte (which will be described in detail later).

The content of the binder in the positive electrode mixture is preferably 15% by mass or less and is also preferably 0.5% by mass or more. On the other hand, when the positive electrode mixture ensures moldability without requiring a binder, the content of the binder in the positive electrode mixture is preferably 0.5% by mass or less, more preferably 0.3% by mass or less, and further preferably 0% by mass (i.e., no binder is contained).

When the electrochemical device is an all-solid-state battery (such as all-solid-state primary battery or all-solid-state secondary battery), the positive electrode mixture preferably contains a solid electrolyte.

The solid electrolyte contained in the positive electrode mixture is not particularly limited, but should have a lithium ion conductivity. For example, the solid electrolyte may be a sulfide-based solid electrolyte, a hydride-based solid electrolyte, a halide-based solid electrolyte, or an oxide-based solid electrolyte.

The examples of the sulfide-based solid electrolyte include the following: particles of Li₂S-P₂S₅-based glass, Li₂S-SiS₂-based glass, Li₂S-P₂S₅-GeS₂-based glass, and Li₂S-B₂S₃-based glass; thio-LISICON type solid electrolytes (represented by Li_{12 - 12a - b + c + 6d - e}M¹_{3 + a - b - c - d}M²_{b}M³_{c}M⁴_{d}M⁵₁₂ - ₑXₑ, where M¹ is Si, Ge, or Sn, M² is P or V, M³ is Al, Ga, Y, or Sb, M⁴ is Zn, Ca, or Ba, M⁵ is either S or S and O, X is F, Cl, Br, or I, 0 ≤ a < 3, 0 ≤ b + c + d ≤ 3, and 0 ≤ e ≤ 3) such as Li₁₀GeP₂S₁₂ and Li_{9.54}Si_{1.74}P_{1.44}S_{11.7}Cl_{0.3}, which have attracted attention in recent years because of high lithium ion conductivity; and solid electrolytes having an argyrodite-type crystal structure.

The examples of the hydride-based solid electrolyte include LiBH₄ and solid solutions of LIBH₄ and any of the following alkali metal compounds (e.g., the molar ratio of LiBH₄ to the alkali metal compound ranges from 1:1 to 20:1). The alkali metal compound in the solid solution may be at least one selected from the group consisting of lithium halides (LiI, LiBr, LiF, LiCl, etc.), rubidium halides (RbI, RbBr, RbF, RbCl, etc.), cesium halides (CsI, CsBr, CsF, CsCl, etc.), lithium amides, rubidium amides, and cesium amides.

The examples of the halide-based solid electrolyte include monoclinic LiAlCl₄, defective spinel-type or layered LiInBr₄, and monoclinic Li_{6 - 3m}YₘX₆ (where 0 < m < 2 and X = Cl or Br). In addition to the above, known solid electrolytes as disclosed in, e.g., WO 2020/070958 and WO 2020/070955 can also be used.

The examples of the oxide-based solid electrolyte include garnet-type: Li₇La₃Zr₂O₁₂, NASICON-type: Li_{1 + O}Al_{1 + O}Ti₂ - _{O}(PO₄)₃ and Li_{1 + p}Al_{1 + b}Ge₂ - ₚ(PO₄)₃, and perovskite-type: Li_{3q}La_{2/3} - _{q}TiO₃.

Among these solid electrolytes, the sulfide-based solid electrolyte is preferred because it has a high lithium ion conductivity, the sulfide-based solid electrolyte containing Li and P is more preferred, and the sulfide-based solid electrolyte having an argyrodite-type crystal structure is further preferred because it has a higher lithium ion conductivity and high chemical stability.

The sulfide-based solid electrolyte having an argyrodite-type crystal structure represented by the following general composition formula (1) or (2), such as Li₆PS₅Cl, is particularly preferred.

Li_{7 - x + y}PS_{6 - x}Cl_{x + y} (1)

In the general composition formula (1), x and y satisfy 0.05 ≤ y ≤ 0.9 and - 3.0x + 1.8 ≤ y ≤ - 3.0x + 5.7.

Li₇ - ₐPS₆ - ₐCl_{b}Br_{c} (2)

In the general composition formula (2), a, b, and c satisfy a = b + c, 0 < a ≤ 1.8, and 0.1 ≤ b/c ≤ 10.0.

The average particle size of the solid electrolyte is preferably 0.1 µm or more, and more preferably 0.2 µm or more from the viewpoint of reducing grain boundary resistance. On the other hand, the average particle size of the solid electrolyte is preferably 10 µm or less, and more preferably 5 µm or less from the viewpoint of forming a sufficient contact interface between the active material and the solid electrolyte.

The content of the solid electrolyte in the positive electrode mixture is preferably 10 parts by mass or more, and more preferably 15 parts by mass or more with respect to 100 parts by mass of the positive electrode active material from the viewpoint of further increasing the ionic conduction in the positive electrode and further improving the output characteristics of the electrochemical device. However, if the amount of the solid electrolyte in the positive electrode mixture is too large, the amounts of other components will be reduced, so that their effects may be smaller. Therefore, the content of the solid electrolyte in the positive electrode mixture is preferably 65 parts by mass or less, and more preferably 60 parts by mass or less with respect to 100 parts by mass of the positive electrode active material.

When the electrochemical device is a battery and one of the first electrode and the second electrode is a negative electrode, the electrode mixture of the negative electrode, i.e., the negative electrode mixture contains, e.g., a negative electrode active material. In the following, the molded body of the electrode mixture of the negative electrode is referred to as a "negative electrode mixture molded body" and the electrode mixture layer of the negative electrode is referred to as a "negative electrode mixture layer."

The examples of the negative electrode active material include carbon materials such as graphite, lithium titanium oxides (e.g., lithium titanate), and simple substances, compounds (e.g., oxides), and their alloys that contain elements such as Si and Sn. Moreover, the negative electrode active material may be, e.g., lithium metal or lithium alloys (such as lithium-aluminum alloy and lithium-indium alloy).

The content of the negative electrode active material in the negative electrode mixture is preferably 40 to 99% by mass from the viewpoint of further increasing the energy density of the battery.

The negative electrode mixture may contain a conductive assistant. Specific examples of the conductive assistant may be the same as those listed above for the positive electrode mixture. The content of the conductive assistant in the negative electrode mixture is preferably 10 to 30 parts by mass with respect to 100 parts by mass of the negative electrode active material.

The negative electrode mixture may contain a binder. Specific examples of the binder may be the same as those listed above for the positive electrode mixture. The negative electrode mixture does not need to contain a binder, provided that good moldability can be ensured in forming the negative electrode mixture molded body (the negative electrode mixture layer) without using a binder, e.g., as in the case where the negative electrode mixture contains a sulfide-based solid electrolyte (which will be described later).

The content of the binder in the negative electrode mixture is preferably 15% by mass or less and is also preferably 0.5% by mass or more. On the other hand, when the negative electrode mixture ensures moldability without requiring a binder, the content of the binder in the negative electrode mixture is preferably 0.5% by mass or less, more preferably 0.3% by mass or less, and further preferably 0% by mass (i.e., no binder is contained).

When the electrochemical device is an all-solid-state battery, the negative electrode mixture preferably contains a solid electrolyte. Specific examples of the solid electrolyte may be the same as those listed above for the positive electrode mixture. Among the solid electrolytes listed above, the sulfide-based solid electrolyte is preferred because it has a high lithium ion conductivity and also has the function of enhancing the moldability of the negative electrode mixture, the sulfide-based solid electrolyte having an argyrodite-type crystal structure is more preferred, and the sulfide-based solid electrolyte represented by the general composition formula (1) or (2) is further preferred.

The average particle size of the solid electrolyte contained in the negative electrode mixture is preferably 0.1 µm or more, and more preferably 0.2 µm or more and is also preferably 10 µm or less, and more preferably 5 µm or less for the same reasons as those described above for the positive electrode mixture.

The content of the solid electrolyte in the negative electrode mixture is preferably 30 parts by mass or more, and more preferably 35 parts by mass or more with respect to 100 parts by mass of the negative electrode active material from the viewpoint of further increasing the ionic conduction in the negative electrode and further improving the output characteristics of the electrochemical device. However, if the amount of the solid electrolyte in the negative electrode mixture is too large, the amounts of other components will be reduced, so that their effects may be smaller. Therefore, the content of the solid electrolyte in the negative electrode mixture is preferably 130 parts by mass or less, and more preferably 110 parts by mass or less with respect to 100 parts by mass of the negative electrode active material.

In the first aspect of the present invention, when the first electrode and the second electrode have an electrode mixture molded body, the thickness of the electrode mixture molded body is preferably 500 to 3000 µm.

In the first aspect of the present invention, when the first electrode and the second electrode have a current collector, the examples of the current collector include foil, punched metal, net, expanded metal, and foamed metal that are made of metals, and a carbon sheet.

Among these current collectors, a foamed metal porous body (e.g., "Celmet (registered trademark)" manufactured by Sumitomo Electric Industries, Ltd.) is preferably used because it has higher current collection efficiency. The electrode mixture molded body of the first electrode or the second electrode has a relatively rough surface, and the current collector made of a foamed metal porous body also has a relatively rough surface. Therefore, a part of the surface of the current collector may penetrate into the electrode mixture molded body from its surface, resulting in a larger contact area.

The thickness of the current collector is preferably 30 to 100 µm.

In the first aspect of the present invention, when the electrochemical device is a battery, one of the first electrode and the second electrode is used as a negative electrode and may have a metal sheet such as a lithium sheet or a lithium alloy sheet that functions as a negative electrode active material.

In the second aspect of the present invention, when each electrode has a sheet-type current collector, the porous base material used to form the sheet-type current collector may be a conductive base material that is easily compressible and has a high porosity, and preferably a foamed metal porous body. Specific examples of the foamed metal porous body include "Celmet (registered trademark)" manufactured by Sumitomo Electric Industries, Ltd. Moreover, woven or nonwoven fabrics made of carbon fibers can also be preferably used. The thickness of the porous base material before it is used for the electrode (electrode stacked body), i.e., the thickness of the porous base material before compression is preferably 0.1 mm or more, more preferably 0.3 mm or more, and particularly preferably 0.5 mm or more. On the other hand, the thickness of the porous base material is preferably 3 mm or less, more preferably 2 mm or less, and particularly preferably 1.5 mm or less.

The porosity of the porous base material before compression is preferably 80% or more, more preferably 90% or more, and particularly preferably 95% or more so that the porous base material and the electrode mixture layer can be easily integrated in the process of pressing the porous base material and the electrode mixture together. On the other hand, the porosity of the porous base material is preferably 99.5% or less, more preferably 99% or less, and particularly preferably 98.5% or less in order to improve the conductive properties, while maintaining the amount of the base material at a certain level or more.

In the electrode with the above configuration, the thickness of the sheet-type current collector (i.e., the thickness after compressing the porous base material) is preferably 10 µm or more, more preferably 20 µm or more, and particularly preferably 30 µm or more. On the other hand, the thickness of the sheet-type current collector is preferably 300 µm or less, more preferably 200 µm or less, and particularly preferably 100 µm or less. The thickness of the electrode mixture layer is preferably 0.2 mm or more, more preferably 0.5 mm or more, and particularly preferably 0.7 mm or more. On the other hand, the thickness of the electrode mixture layer is preferably 2 mm or less, more preferably 1.7 mm or less, and particularly preferably 1.5 mm or less.

At least a part of the sheet-type current collector after compression may be embedded in the electrode mixture layer and integrated with the electrode mixture layer.

In the second aspect of the present invention, when only one of the first electrode and the second electrode of the electrode stacked body is configured to have an electrode mixture layer and a sheet-type current collector formed by compressing a porous base material in the thickness direction, the other electrode may be any of the following: an electrode consisting of an electrode mixture molded body (such as a pellet); an electrode having an electrode mixture molded body (electrode mixture layer) that is formed on a current collector (which is other than the compressed porous base material, e.g., a metal foil); or a metal sheet such as a lithium sheet or a lithium alloy sheet that functions as a negative electrode active material (where the electrochemical device is a battery and the other electrode is a negative electrode).

In order to reduce the resistance that occurs when the electrode having the sheet-type current collector formed by compressing the porous base material is brought into contact with the conductive path, it is desirable that only the sheet-type current collector is present at the end portion of the electrode (i.e., the surface of the electrode). In other words, when the porous base material is compressed in the thickness direction during the production of the electrode stacked body, as will be described later, it is desirable that pores in the end portion of the porous base material are crushed away, leaving only the base material exposed on the surface of the electrode. However, some of the pores in the end portion of the porous base material may not be crushed, but may be filled with the electrode mixture. In this case, a part of the electrode mixture may be exposed on the surface of the electrode along with the end portion of the porous base material, as long as it does not significantly affect the contact resistance with the conductive path.

The greater the proportion (area ratio) of the electrode mixture exposed on the surface of the electrode, the larger the contact resistance between the porous base material and the conductive path of the electrochemical device. Therefore, the proportion of the area of the exposed electrode mixture on the electrode surface is preferably 50% or less, more preferably 25% or less, even more preferably 15% or less, and particularly preferably 10% or less in a plan view.

In the electrode stacked body in the second aspect of the present invention, at least a part of the sheet-type current collector may be embedded in the electrode mixture layer, as described above. The thickness of the sheet-type current collector and the thickness of the electrode mixture layer are each determined in the following manner. First, the cross section of the electrode in the thickness direction is observed with a scanning electron microscope (SEM) at a magnification of 50X to 1000X. Then, the maximum value of the width (in the thickness direction) of a region where the sheet-type current collector can be identified in the SEM image is defined as the thickness of the sheet-type current collector, and the maximum value of the width (in the thickness direction) of a region where the electrode mixture can be identified (except for the portion overlapping with the region where the sheet-type current collector can be identified) in the SEM image is defined as the thickness of the electrode mixture layer. The values in the following examples are obtained by this method.

When the electrochemical device including the electrode stacked body is an electric double layer capacitor, the first electrode and the second electrode each may have an electrode mixture molded body (electrode mixture layer) composed of an electrode mixture with the same configuration as the positive electrode mixture described above, except that the active material is activated carbon.

When the electrochemical device including the electrode stacked body is a lithium ion capacitor, one of the first electrode and the second electrode may be used as a positive electrode with the same configuration as the first electrode and the second electrode of the electric double layer capacitor, and the other electrode may be used as a negative electrode with the same configuration as the negative electrode of the battery.

In the electrode stacked body, the isolation layer is interposed between the first electrode and the second electrode. The battery or capacitor that does not include an electrolyte containing a solvent, such as an all-solid-state battery, uses a solid electrolyte layer as the isolation layer.

Specific examples of the solid electrolyte constituting the solid electrolyte layer may be the same as those listed above for the positive electrode mixture. Among the solid electrolytes listed above, the sulfide-based solid electrolyte is preferred because it has a high lithium ion conductivity and also has the function of enhancing the moldability, the sulfide-based solid electrolyte having an argyrodite-type crystal structure is more preferred, and the sulfide-based solid electrolyte represented by the general composition formula (1) or (2) is further preferred.

The solid electrolyte layer may have a porous body such as a resin nonwoven fabric as a support.

The thickness of the solid electrolyte layer is preferably 10 to 200 µm.

In the electrode stacked body for the battery or capacitor that includes an electrolyte containing a solvent, a separator is used as the isolation layer interposed between the first electrode and the second electrode.

The separator should have sufficient strength and be able to retain a large amount of electrolyte. From this viewpoint, the separator is preferably a microporous film or a nonwoven fabric that contains polyethylene, polypropylene, or an ethylene-propylene copolymer and has a thickness of 10 to 50 µm and an aperture ratio of 30 to 70%.

The electrode stacked body can be produced by, e.g., arranging the first electrode and the second electrode respectively on the surfaces of the solid electrolyte layer or separator that has been separately formed. For example, the first electrode and/or the second electrode may be made of an electrode mixture molded body obtained by pressure molding of an electrode mixture. Moreover, the first electrode and/or the second electrode may be prepared by forming the electrode mixture molded body as an electrode mixture layer on the surface of a current collector. Further, the first electrode or the second electrode may be a metal sheet that functions as a negative electrode active material. Alternatively, the electrode stacked body can also be produced by the following procedure. For example, a solid electrolyte constituting the solid electrolyte layer is placed in a die and is pressure molded into a temporary molded body. Then, an electrode mixture constituting the first electrode (or the second electrode) is placed on one surface of the temporary molded body of the solid electrolyte and is pressure molded, so that the solid electrolyte is integrated with a temporary molded body of the first electrode (or the second electrode). Further, an electrode mixture constituting the second electrode (or the first electrode) is placed on the other surface of the temporary molded body of the solid electrolyte and is pressure molded.

The first electrode or the second electrode may be formed by arranging a current collector on one side of the electrode mixture placed in the die, and pressure molding them together. Thus, the first electrode or the second electrode having the current collector can be provided.

In particular, the second aspect of the present invention may include, e.g., the following first to third steps to produce an electrode stacked body.

In the first step, a solid electrolyte is placed in a die and is pressure molded. The surface pressure of the pressure molding in the first step is preferably, e.g., 30 to 120 MPa.

In the second step, an electrode mixture is placed on one side of the solid electrolyte formed in the first step, and the electrode mixture is pressure molded along with the solid electrolyte to form a stacked body of a solid electrolyte layer and an electrode mixture layer. The surface pressure of the pressure molding in the second step is preferably, e.g., 30 to 500 MPa.

Subsequently, the die is turned upside down, and another electrode mixture is placed on the opposite side of the solid electrolyte layer to the electrode mixture layer. Then, the electrode mixture and the solid electrolyte layer are further pressure molded in the third step, thus providing an electrode stacked body. The surface pressure during pressing in the third step is preferably 800 MPa or more, more preferably 1000 MPa or more, and particularly preferably 1200 MPa or more to sufficiently increase the density of the electrode mixture layer.

The upper limit of the surface pressure during pressing in the third step is not particularly determined, and is usually about 2000 MPa in a general pressure device.

Next, the electrode stacked body and a porous base material are laid one on top of the other and pressed in the thickness direction so that the porous base material is compressed. This allows the electrode stacked body to have a sheet-type current collector disposed on the surface of the electrode mixture layer of one of the electrodes. In this step, the porous base material is compressed in the thickness direction. Specifically, the degree of compression is such that the thickness of the sheet-type current collector after the compression is preferably 30% or less, more preferably 20% or less, and particularly preferably 10% or less of the thickness of the porous base material before the compression from the viewpoint of ensuring the contact with the electrode mixture layer.

On the other hand, the lower limit of the thickness of the sheet-type current collector after the compression is determined to satisfy s - t < a + b. Specifically, the thickness of the sheet-type current collector after the compression is preferably 1% or more, and more preferably 2% or more of the thickness of the porous base material before the compression.

The electrode stacked body having a separator can be produced in the following manner. Two electrodes, each of which has been formed by pressing as described above, are prepared and arranged on both sides of a separator to form an electrode stacked body. Then, the electrode stacked body and a porous base material are laid one on top of the other and pressed in the thickness direction. This allows the electrode stacked body to have a sheet-type current collector disposed on the surface of one of the electrodes. The electrode located on one side of the separator may be an electrode other than the electrode with the above configuration (such as an electrode consisting of an electrode mixture molded body without a current collector, or an electrode having a current collector made of, e.g., metal foil).

### <Exterior body>

In the first aspect of the present invention, the exterior body of the electrochemical device may be configured to have a conductive path leading from the inside to the outside of the exterior body, to bring the conductive path into contact with the porous metal base material on the surface of one of the electrodes of the electrode stacked body, and to provide electrical conduction between the electrode and the conductive path. For example, the exterior body may be a case composed of an exterior container and a lid, as illustrated in FIG. 1. The exterior container may be made of ceramics or resin. The lid may be made of ceramics, resin, or metals (e.g., iron-based alloys such as iron-nickel alloy and iron-nickel-cobalt alloy).

In the exterior container, the external terminals and the conductive paths that respectively connect the electrodes of the electrode stacked body to the external terminals may be made of metals such as manganese, cobalt, nickel, copper, molybdenum, silver, palladium, tungsten, platinum, and gold or alloys containing these metals.

The exterior container and the lid can be bonded together with an adhesive and sealed. In addition, when a metal lid is used, the side wall of the inner cavity of the exterior container that is nearer to the lid is formed of metals (e.g., iron-based alloys such as iron-nickel alloy and iron-nickel-cobalt alloy) and is welded to the lid, so that the exterior container and the lid can be sealed.

In the second aspect of the present invention, the exterior body of the electrochemical device may be, e.g., a case composed of an exterior can and a sealing can, as illustrated in FIG. 3. The electrochemical device having such a case is in the form of a coin (button).

When the exterior body of the electrochemical device is the case composed of the exterior can and the sealing can, the exterior can and the sealing can may be sealed by caulking via a gasket, as illustrated in FIG. 3, or may be bonded together with a resin.

The exterior can and the sealing can may be made of, e.g., stainless steel. The gasket may be made of, e.g., polypropylene or nylon. When heat resistance is required in relation to the intended use of the electrochemical device, the gasket may also be made of heat-resistant resin with a melting point of more than 240°C. The examples of the heat-resistance resin include: fluororesins such as a tetrafluoroethylene-perfluoroalkoxyethylene copolymer (PFA); polyphenylene ether (PPE); polysulfone (PSF); polyarylate (PAR); polyether sulfone (PES); polyphenylene sulfide (PPS); and polyetheretherketone (PEEK). Moreover, when the electrochemical device is used for applications requiring heat resistance, the exterior body can be sealed by a glass hermetic seal.

In the second aspect of the present invention, the exterior body of the electrochemical device is not limited to the structure having the exterior can and the sealing can, and may be configured to have a conductive path leading from the inside to the outside of the exterior body, to bring the conductive path into contact with the sheet-type current collector on the surface of one of the electrodes of the electrode stacked body, and to provide electrical conduction between the electrode and the conductive path. For example, the exterior body may be a ceramic case (e.g., a case composed of an exterior container and a lid, as illustrated in FIG. 1) in which a conductive path made of metals such as gold, platinum, silver, palladium, copper, nickel, and cobalt or alloys thereof is provided so as to pass through the constituent materials.

The exterior body of the electrochemical device may be, e.g., circular or polygonal such as quadrilateral (square or rectangle) in a plan view.

### <Electrolyte>

The electrolyte is used in the electrochemical device including the electrode stacked body that includes a separator as the isolation layer, as described above. The electrolyte is usually a liquid electrolyte having a non-aqueous solvent or an aqueous solvent (i.e., a non-aqueous electrolyte solution or an aqueous electrolyte solution). The non-aqueous electrolyte solution is prepared by dissolving an electrolyte salt such as a lithium salt in an organic solvent. The organic solvent is not particularly limited, and the examples of the organic solvent include: chain esters such as dimethyl carbonate, diethyl carbonate, ethyl methyl carbonate, and methyl propyl carbonate; cyclic esters with a high dielectric constant such as ethylene carbonate, propylene carbonate, butylene carbonate, and vinylene carbonate; and mixed solvents of chain esters and cyclic esters. In particular, a mixed solvent containing a chain ester as the main solvent and a cyclic ester is preferred.

When the electrochemical device is a battery or a lithium ion capacitor, the examples of the electrolyte salt that is dissolved in the organic solvent to prepare the non-aqueous electrolyte solution include LiPF₆, LiBF₄, LiAsF₆, LiSbF₆, LiCF₃SO₃, LiC₄F₉SO₃, LiCF₃CO₂, Li₂C₂F₄(SO₃)₂, LiCₙF₂ₙ₊₁SO₃ (n ≥ 2), LiN(RfSO₂)(Rf'SO₂), LiC(RfSO₂)₃, and LiN(RfOSO₂)₂ (where Rf and Rf' each represents a fluoroalkyl group). These electrolyte salts may be used alone or in combination of two or more. When the electrochemical device is an electric double layer capacitor, the electrolyte salt in the non-aqueous electrolyte solution may be, e.g., (C₂H₅)₄NBF₄ or (C₂H₅)₄PBF₄.

The concentration of the electrolyte salt in the electrolyte solution is not particularly limited, and is preferably 0.3 mol/l or more, more preferably 0.4 mol/l or more and is also preferably 1.7 mol/l or less, and more preferably 1.5 mol/l or less.

The aqueous electrolyte solution may be, e.g., an alkaline aqueous solution (alkaline electrolyte solution) composed of an aqueous solution of alkali metal hydroxide such as potassium hydroxide, sodium hydroxide, or lithium hydroxide, or an aqueous solution with a pH of 3 or more and 12 or less.

The concentration of the alkali metal hydroxide in the alkaline electrolyte solution may be, e.g., 25 to 40% by mass.

The aqueous solution with a pH of 3 or more and 12 or less may be prepared by dissolving either one or two or more of the following electrolyte salts in water. For example, the electrolyte salts include: chlorides such as sodium chloride, potassium chloride, magnesium chloride, calcium chloride, ammonium chloride, and zinc chloride; hydroxides of alkali metals or alkaline-earth metals (e.g., sodium hydroxide, potassium hydroxide, and magnesium hydroxide), acetates (e.g., sodium acetate, potassium acetate, and magnesium acetate), nitrates (e.g., sodium nitrate, potassium nitrate, and magnesium nitrate), sulfates (e.g., sodium sulfate, potassium sulfate, and magnesium sulfate), phosphates (e.g., sodium phosphate, potassium phosphate, and magnesium phosphate), borates (e.g., sodium borate, potassium borate, and magnesium borate), citrates (e.g., sodium citrate, potassium citrate, and magnesium citrate), and glutamates (e.g., sodium glutamate, potassium glutamate, and magnesium glutamate); hydrogencarbonates of alkali metals (e.g., sodium hydrogencarbonate and potassium hydrogencarbonate); percarbonates of alkali metals (e.g., sodium percarbonate and potassium percarbonate); compounds containing halogens such as fluorides; and polycarboxylic acids.

The electrolyte of the electrochemical device may be a gel electrolyte obtained by gelation of the electrolyte solution with a gelling agent such as a polymer.

### Examples

Hereinafter, the present invention will be described in detail by way of examples. However, the present invention is not limited to the following examples.

### (Example 1)

A negative electrode mixture was prepared by mixing lithium titanate (Li₄Ti₅O₁₂, negative electrode active material) with an average particle size of 2 µm, a sulfide-based solid electrolyte (Li₆PS₅Cl) with an average particle size of 0.7 µm, and graphene (conductive assistant) at a mass ratio of 50:41:9.

A positive electrode mixture was prepared by mixing LiCoO₂ (positive electrode active material) with an average particle size of 5 µm, which had a LiNbO₃ coating layer on the surface, a sulfide-based solid electrolyte (Li₆PS₅Cl) with an average particle size of 0.7 µm, and graphene at a mass ratio of 65:30.7:4.3.

Next, a powder of a sulfide-based solid electrolyte (Li₆PS₅Cl) with an average particle size of 0.7 µm was placed in a powder molding die and was pressure molded using a press to form a temporary molded layer of a solid electrolyte layer. Moreover, the negative electrode mixture was placed on the upper surface of the temporary molded layer of the solid electrolyte layer, and then pressure molded, so that a temporary molded layer of a negative electrode was further formed on the temporary molded layer of the solid electrolyte layer.

Next, a foamed metal porous body made of nickel ("Celmet (registered trademark)" manufactured by Sumitomo Electric Industries, Ltd.) was cut into a diameter of 7.25 mm (thickness: 1.2 mm, porosity: 98%) and placed on the temporary molded layer of the negative electrode that had been formed on the temporary molded layer of the solid electrolyte layer. The foamed metal porous body was then pressure molded into an integrated body of the solid electrolyte layer and the negative electrode.

After the die was turned upside down, the positive electrode mixture was placed on the upper surface of the solid electrolyte layer (i.e., the opposite side of the solid electrolyte layer to the negative electrode) in the die, and then pressure molded, so that a temporary molded layer of a positive electrode was formed on the solid electrolyte layer.

Next, a cut piece of the foamed metal porous body made of nickel, which was the same as that used for the negative electrode, was placed on the temporary molded layer of the positive electrode that had been formed on the solid electrolyte layer. The foamed metal porous body was then pressure molded, thus providing an electrode stacked body.

An exterior container having the same cross-sectional structure as illustrated in FIG. 1 was used, in which the side wall of the inner cavity that was nearer to a lid was made of an iron-nickel-cobalt alloy and the remainder was made of ceramics. The foamed metal porous body made of nickel, which was the same as that used for the positive electrode and the negative electrode, was cut into a diameter of 7.25 mm and placed at the bottom of the inner cavity of the exterior container. Then, the electrode stacked body was placed on the foamed metal porous body with the positive electrode facing down, and the remaining one of the current collectors was placed on the negative electrode of the electrode stacked body. Subsequently, a lead (Ni foil) was placed on the current collector, on top of which a 400 µm thick rubber sheet (spacer) was placed. Thereafter, a lid made of an iron-nickel-cobalt alloy was put on the side wall of the inner cavity of the exterior container, and the lid and the exterior container were welded together while compressing the rubber sheet in the thickness direction. Thus, the exterior body composed of the exterior container and the lid was sealed, resulting in an all-solid-state secondary battery. In the all-solid-state secondary battery, the rubber sheet serving as a spacer was compressed in the thickness direction, which in turn presses the electrode stacked body against the porous metal layer made of the foamed metal porous body. The porous metal layer in the all-solid-state secondary battery had a thickness of 200 µm.

### (Comparative Example 1)

An all-solid-state secondary battery was produced in the same manner as Example 1, except that the foamed metal porous body made of nickel that was located at the bottom of the inner cavity of the exterior container was replaced by a nickel foil (thickness: 200 µm).

### (Comparative Example 2)

An electrode stacked body consisting of a positive electrode, a solid electrolyte layer, and a negative electrode was produced by the same pressure molding as described above, without using the foamed metal porous body made of nickel as a current collector. A graphite sheet (thickness: 200 µm) was cut into a diameter of 7.25 mm and placed at the bottom of the inner cavity of the same exterior container as that in Example 1. The above electrode stacked body was placed on the graphite sheet with the positive electrode facing down, and another graphite sheet, which had been cut as described above, was further placed on the negative electrode of the electrode stacked body. Subsequently, a lead and a rubber sheet (spacer) were placed in the same manner as Example 1 and sealed, resulting in an all-solid-state secondary battery.

As described above, 20 all-solid-state secondary batteries were produced in each of Example 1 and Comparative Examples 1, 2. Then, the internal resistances at 1 kHz of the individual batteries were measured, and the average and the standard deviation of the measured internal resistances were determined. Table 1 shows the results. As shown in Table 1, the values in parentheses in the "standard deviation" column are coefficients of variation (expressed in terms of percentage).

**[TABLE 1]**

| | Internal resistance at 1 kHz (Ω) | |
|---|---|---|
| | Average | Standard deviation (coefficient of variation) |
| Example 1 | 10.5 | 0.3 (2.9%) |
| Comparative Example 1 | 51.7 | 48.0 (92.8%) |
| Comparative Example 2 | 35.0 | 2.0 (5.7%) |

In the all-solid-state batteries of Example 1, in each of which the porous metal layer was located at the bottom of the inner cavity of the container, the internal resistance was low and a variation in the internal resistance was small and stable. On the other hand, the batteries of Comparative Example 1, in each of which the metal foil instead of the porous metal layer was located at the bottom of the inner cavity of the container, and the batteries of Comparative Example 2, in each of which the graphite sheet was used as a current collector, had a higher internal resistance and a larger variation in the internal resistance than the batteries of Example 1. In particular, the batteries of Comparative Example 1 had a large variation in the internal resistance, and some of them could not be energized and their internal resistances could not be measured. For this reason, these batteries are excluded in calculating the average and the standard deviation in Table 1.

### (Example 2)

A negative electrode mixture was prepared by mixing lithium titanate (Li₄Ti₅O₁₂, negative electrode active material) with an average particle size of 2 µm, a sulfide-based solid electrolyte (Li₆PS₅Cl) with an average particle size of 0.7 µm, and graphene (conductive assistant) at a mass ratio of 50:41:9.

A positive electrode mixture was prepared by mixing LiCoO₂ (positive electrode active material) with an average particle size of 5 µm, which had a LiNbO₃ coating layer on the surface, a sulfide-based solid electrolyte (Li₆PS₅Cl) with an average particle size of 0.7 µm, and graphene at a mass ratio of 65:30.7:4.3.

Next, a powder of a sulfide-based solid electrolyte (Li₆PS₅Cl) with an average particle size of 0.7 µm was placed in a powder molding die and was pressure molded at a surface pressure of 70 MPa using a press to form a temporary molded layer of a solid electrolyte layer. Moreover, the negative electrode mixture was placed on the upper surface of the temporary molded layer of the solid electrolyte layer, and then pressure molded at a surface pressure of 50 MPa, so that a temporary molded layer of a negative electrode was further formed on the temporary molded layer of the solid electrolyte layer.

After the die was turned upside down, the positive electrode mixture was placed on the upper surface of the solid electrolyte layer (i.e., the opposite side of the solid electrolyte layer to the negative electrode) in the die, and then pressure molded at a surface pressure of 1400 MPa. Thus, an electrode stacked body was provided that included the positive electrode with a thickness of 0.8 mm, the solid electrolyte layer with a thickness of 0.35 mm, and the negative electrode with a thickness of 1.4 mm.

Next, a flexible graphite sheet "PERMA-FOIL (product name)" (thickness: 0.1 mm, apparent density: 1.1 g/cm³) manufactured by TOYO TANSO CO., LTD. and a foamed metal porous body made of nickel "Celmet (registered trademark)" (thickness: 1.2 mm, porosity: 98%) manufactured by Sumitomo Electric Industries, Ltd. were each punched to the same size as the electrode stacked body. The flexible graphite sheet, the electrode stacked body, and the foamed metal porous body were put one on top of the other in this order on the inner bottom surface of a stainless steel sealing can, into which a polypropylene annular gasket had been fitted. This sealing can was covered with a stainless steel exterior can, and then the edge around the opening of the exterior can was crimped inward and sealed, resulting in a flat all-solid-state battery. The electrode stacked body was placed with the negative electrode facing the flexible graphite sheet (the sealing can) and the positive electrode facing the foamed metal porous body (the exterior can). Assuming that the position of the foamed metal porous body would be shifted during assembly, the battery was assembled so that the foamed metal porous body was displaced from the electrode stacked body.

In this battery, the foamed metal porous body was compressed in the thickness direction as the edge around the opening of the exterior can was crimped, thereby forming the positive electrode having a sheet-type current collector on the surface of the positive electrode mixture layer.

The sealed battery was disassembled to measure the thickness of the sheet-type current collector facing the positive electrode mixture layer after the compression. The measured thickness was 0.1 mm. The difference between the thickness of the sheet-type current collector and the thickness (1.2 mm) of the porous base material before the compression was 1.1 mm, which was smaller than the sum: 1.15 mm of the thickness (0.8 mm) of the positive electrode mixture layer and the thickness (0.35 mm) of the solid electrolyte layer.

Using 100 assembled batteries, the presence or absence of a short circuit was checked during charge and discharge of each of the batteries. As a result, none of them caused a short circuit.

For comparison, a flat all-solid-state battery was produced in the same manner as the above battery except that the electrode stacked body included a positive electrode with a thickness of 0.7 mm, a solid electrolyte layer with a thickness of 0.3 mm, and a negative electrode with a thickness of 1.2 mm, four flexible graphite sheets were stacked on the negative electrode, and the porous base material was replaced by a foamed metal porous body with a thickness of 1.4 mm before compression.

The sealed battery was disassembled to measure the thickness of the sheet-type current collector facing the positive electrode mixture layer after the compression. The measured thickness was 0.12 mm. The difference between the thickness of the sheet-type current collector and the thickness (1.4 mm) of the porous base material before the compression was 1.28 mm, which was larger than the sum: 1 mm of the thickness (0.7 mm) of the positive electrode mixture layer and the thickness (0.3 mm) of the solid electrolyte layer.

Using 100 assembled batteries, the presence or absence of a short circuit was checked during charge and discharge of each of the batteries. As a result, 8 batteries were short-circuited.

These results confirmed that when the porous base material is compressed in the thickness direction to form a sheet-type current collector, the occurrence of a short circuit can be prevented by adjusting the amount of compression of the porous base material, even if the position of the porous base material is shifted.

The invention may be embodied in other forms without departing from the essential characteristics thereof. The embodiments disclosed in this application are to be considered in all respects as illustrative and not limiting. The scope of the invention is indicated by the appended claims rather than by the foregoing description, and all changes that come within the meaning and range of equivalency of the claims are intended to be embraced therein.

### Industrial Applicability

The electrochemical device of the present invention can be used in the same applications as those of conventionally known electrochemical devices. The electrode stacked body produced by the production method of the present invention can constitute the electrochemical device in the second aspect of the present invention.

### Description of Reference Numerals

- 10: Electrochemical device
- 20: Electrode stacked body
- 21: First electrode
- 211: Electrode mixture layer (molded body of electrode mixture)
- 212: Current collector
- 22: Second electrode
- 221: Electrode mixture layer (molded body of electrode mixture)
- 222: Current collector
- 23: Isolation layer
- 30: Porous metal layer
- 40: Lead
- 50: Pressing member (spacer)
- 80, 90: External terminal
- 81, 91: Conduction path
- 100: Electrochemical device
- 110: First electrode
- 111: Electrode mixture layer
- 112: Sheet-type current collector
- 120: Second electrode
- 121: Electrode mixture layer
- 122: Sheet-type current collector
- 130: Isolation layer
- 140: Electrode stacked body
- 150: Exterior can
- 160: Sealing can
- 170: Gasket

## Claims

1. An electrochemical device comprising:
an electrode stacked body including a first electrode, a second electrode, and an isolation layer interposed between the first electrode and the second electrode; and
an exterior body in which the electrode stacked body is enclosed,
wherein at least one of the first electrode and the second electrode of the electrode stacked body has a current collector on a surface facing away from the isolation layer and is electrically connected to a porous metal layer that is disposed on a surface of the current collector,
the electrochemical device includes a pressing member for pressing the electrode stacked body against the porous metal layer, and
the exterior body has a conductive path leading from an inside to an outside, and the conductive path is electrically connected to the porous metal layer.

2. The electrochemical device according to claim 1, wherein the porous metal layer is composed of a foamed metal porous body.

3. The electrochemical device according to claim 1, wherein the isolation layer is a solid electrolyte layer.

4. A method for producing an electrode stacked body including a first electrode, a second electrode, and an isolation layer interposed between the first electrode and the second electrode,
wherein at least one of the first electrode and the second electrode has an electrode mixture layer and a sheet-type current collector disposed on a surface of the electrode mixture layer,
the method comprising:
forming the sheet-type current collector by compressing a porous base material in a thickness direction,
wherein an amount of compression of the porous base material is adjusted to satisfy s - t < a + b, where s represents a thickness of the porous base material before the compression, t represents a thickness of a portion of the porous base material after the compression, which faces the electrode mixture layer, a represents a thickness of the electrode mixture layer, and b represents a thickness of the isolation layer.

5. The method according to claim 4, wherein the porous base material is a foamed metal porous body.

6. The method according to claim 4, wherein the isolation layer is a solid electrolyte layer.

7. An electrochemical device comprising:
an exterior body; and
an electrode stacked body enclosed in the exterior body,
wherein the electrode stacked body is produced by the method according to any one of claims 4 to 6.

8. A method for producing an electrochemical device comprising an exterior body and an electrode stacked body enclosed in the exterior body,
the method comprising using an electrode stacked body produced by the method according to any one of claims 4 to 6 as the electrode stacked body.
